(19) Europäisches Patentamt / European Patent Office / Office européen des brevets

(11) **EP 2 044 707 B1**

(12) **EUROPÄISCHE PATENTSCHRIFT**

(45) Veröffentlichungstag und Bekanntmachung des Hinweises auf die Patenterteilung:
**25.11.2009 Patentblatt 2009/48**

(21) Anmeldenummer: **07765806.0**

(22) Anmeldetag: **05.07.2007**

(51) Int Cl.:
*H04B 10/08* (2006.01)     *H04L 1/20* (2006.01)

(86) Internationale Anmeldenummer:
**PCT/EP2007/056807**

(87) Internationale Veröffentlichungsnummer:
**WO 2008/006766 (17.01.2008 Gazette 2008/03)**

(54) **VERFAHREN UND ANORDNUNGEN ZUR BESTIMMUNG DES OPTISCHEN SIGNAL-RAUSCH-VERHÄLTNISSES FÜR EIN OPTISCHES ÜBERTRAGUNGSSYSTEM**

METHOD AND ARRANGEMENTS FOR DETERMINING THE OPTICAL SIGNAL-TO-NOISE RATIO FOR AN OPTICAL TRANSMISSION SYSTEM

PROCÉDÉ ET SYSTÈMES POUR LA DÉTERMINATION DU RAPPORT SIGNAL OPTIQUE/BRUIT POUR UN SYSTÈME DE TRANSMISSION OPTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.07.2006 DE 102006032545**

(43) Veröffentlichungstag der Anmeldung:
**08.04.2009 Patentblatt 2009/15**

(73) Patentinhaber: **Nokia Siemens Networks GmbH & Co. KG**
**81541 München (DE)**

(72) Erfinder: **GOTTWALD, Erich**
**83607 Holzkirchen (DE)**

(56) Entgegenhaltungen:
**EP-A- 1 303 062     EP-A- 1 473 855**
**US-B1- 6 351 322**

**Beschreibung**

Die Erfindung betrifft ein Verfahren zur Bestimmung des optischen Signal-Rausch-Verhältnisses für ein optisches Übertragungssystem und entsprechende Anordnungen.

Für die Protokollierung bzw. Ermittlung der Signalqualität und die Fehlerdiagnose in optischen Übertragungssystemen, insbesondere in Weitverkehrssystemen mit Wellenlängen-Multiplex-Betrieb (engl. "wavelength division multiplexing", abgekürzt WDM), ist das optische Signal-Rauschverhältnis (engl. "optical signal to noise ratio", abgekürzt OSNR) ein wichtiger Güteparameter. Das OSNR ist definiert als Quotient aus der mittleren Signalleistung und der mittleren Rauschleistung bezogen auf ein definiertes Wellenlängenintervall. Typischerweise werden Intervallbreiten von 1 nm oder 0.1 nm entsprechend einem Frequenzintervall von 125 GHz bzw. 12.5 GHz bei 1550 nm verwendet.

Es existieren zahlreiche Methoden zur Ermittlung des OSNR. Üblicherweise wird das OSNR durch optische Messungen z.B. mit Hilfe eines optischen Spektrum-Analysators bestimmt. Bei sehr kleinen Kanalabständen von beispielsweise 25 oder 50 GHz jedoch, sind die Werte für die Signalleistung und die Rauschleistung schwer zu trennen, so dass eine OSNR-Messung im laufenden Betrieb praktisch nicht möglich ist. Bei einem anderen optischen Verfahren, dem so genannten "Polarization Nulling"-Verfahren wird das Signal aufgrund seiner definierten Polarisation mittels Polarisationsfilter vom unpolarisierten Rauschen getrennt. Dieses Verfahren ist jedoch recht ungenau, z. B. bei teilweiser Depolarisation des Datensignals aufgrund von Polarisationsmodendispersion. Außerdem ist der Aufwand wegen einer zusätzlich notwendigen Polarisationsregelung relativ hoch. Bei einer weiteren optischen Methode wird das OSNR durch kurzzeitiges Abschalten des zu messenden Kanals im Sub-Millisekundenbereich bestimmt, was aber nicht im laufenden Betrieb möglich ist.

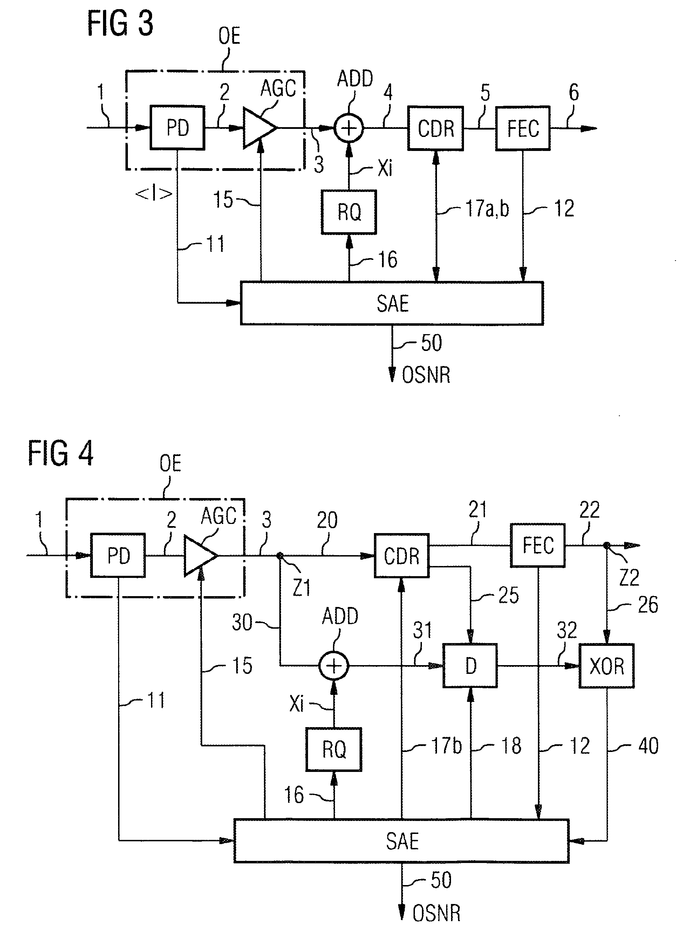

Es existieren ferner elektrische Methoden zur Ermittlung des OSNR, bei denen das OSNR nach der opto-elektrischen Wandlung eines Datensignals im Empfänger bestimmt wird. In der europäischen Patentanmeldung EP1303062 ist ein Verfahren offenbart, in dem die Bitfehlerrate (BER) als Funktion der Entscheiderschwelle gemessen wird und unter anderem auch im Hinblick auf das OSNR ausgewertet wird. Die Methode erfordert insbesondere auch Messungen bei sehr hohen BER nahe 0.5. Die Bereiche mit hoher BER befinden sich im Augendiagramm an den Rändern oben und unten, während die Bereiche mit niedriger BER im inneren zentralen Bereich des Augendiagramms zu finden sind. Werden die BER-Werte in diesen Bereichen extrapoliert, ergeben sich sowohl für die hohe BER zwei Entscheiderschwellwerte als auch für die niedrigere BER zwei Entscheiderschwellwerte. Aus dem Verhältnis der Differenzen dieser Schwellwerte lässt sich die Größe der Augenöffnung berechnen. Wird die BER durch den Q-Faktor ausgedrückt wie in Fig. 4 der europäischen Anmeldung, so lässt sich durch Ermitteln des Schnittpunktes der beiden äußeren Geraden für die niedrige BER das OSNR bestimmen. Nachteilig bei diesem Verfahren ist, dass zur Bestimmung des OSNR die Kenntnis der absoluten minimalen BER notwendig ist und wegen der notwendigen Messungen nahe BER = 0.5 die während des Messvorganges auftretenden Bit-Fehler nicht mehr durch eine Fehlerkorrektur-Einheit FEC ("forward-errorcorrection") korrigierbar sind.

Es ist die Aufgabe der vorliegenden Erfindung, ein weiteres Verfahren anzugeben, bei dem das OSNR nach der opto-elektrischen Wandlung eines Datensignals im Empfänger eines optischen Übertragungssystems bestimmt wird. Es ist eine weitere Aufgabe der Erfindung, eine entsprechende Anordnung anzugeben.

Die erste Aufgabe wird durch ein Verfahren mit den Merkmalen des Patentanspruchs 1 gelöst. Die weitere Aufgabe wird durch eine Anordnung mit den Merkmalen des Patentanspruchs 7 oder mit einer Anordnung mit den Merkmalen des Patentanspruchs 9 gelöst.

Erfindungsgemäß wird vorgeschlagen, dass nach der opto-elektrischen Wandlung eines optischen Datensignals, dem elektrischen Datensignal unterschiedliche Rauschströme hinzugefügt werden und dass für jeden Rauschstrom eine optimale Entscheiderschwelle für das mit diesem Rauschstrom versehene elektrische Datensignal ermittelt wird. Aus den Wertepaaren der optimalen Entscheiderschwelle und dem hinzugefügten Rauschstrom werden anschließend nach einer, auf einem Rauschmodell basierenden Rechenvorschrift Werte für einen mittleren Signalstrom und einen mittleren Rauschstrom der verstärkten spontanen Emission ermittelt und aus deren Quotient das optische Signal-Rausch-Verhältnis berechnet. Die Erfindung erlaubt vorteilhaft eine Bestimmung des OSNR im laufenden Betrieb eines optischen Übertragungssystems. Es kann durch Erweiterung bestehender Empfänger oder als selbständige Messeinheit realisiert werden und benötigt keine optisch aufwendigen Messeinrichtungen. Das Verfahren ist unabhängig von Datenformaten und Datenraten. Die Ausgestaltung des optischen Signals (Polarisation, Modulationsformat) spielt keine Rolle, da das Verfahren hinter der opto-elektrischen Wandlung eingesetzt wird. Ferner erlaubt es eine stete Aktualisierung der Rechenvorschriften und Softwarekomponenten.

In einer vorteilhaften Ausführungsvariante wird die optimale Entscheiderschwelle durch Minimierung der Anzahl der mittels der FEC Fehlerkorrektur ermittelten Fehler bestimmt. Diese Ausführungsvariante zeichnet sich insbesondere durch seine Einfachheit aus, da die optimale Entscheiderschwelle mit standardmäßig bereits vorhandenen Komponenten wie beispielsweise einer Taktrückgewinnungs- und Entscheider-Einheit CDR (Einheit mit Taktrückgewinnung, Entscheider und Regenerator) in Kombination mit einer Fehlerkorrektur-Einheit FEC auskommt.

In einer besonders vorteilhaften Ausführungsvariante wird die optimale Entscheiderschwelle durch Maximierung der Korrelation zwischen einem entschiedenen, mit dem Rauschstrom versehenen elektrischen Datensignal und einem entschiedenen ohne Rauschstrom versehenen elektrischen Datensignal ermittelt. Diese Ausführungsvariante ist auch dann noch funktionsfähig, wenn die Bitfehlerrate durch das Hinzufügen des Rauschstromes sehr groß wird.

In einer vorteilhaften Ausführungsvariante des Verfahrens werden mit den Wertepaaren der optimalen Entscheiderschwelle und dem hinzugefügten Rauschstrom nach einer Rechenvorschrift Werte für einen Signalstrom der logischen Eins, für einen Signalstrom der logischen Null und den mittleren Rauschstrom der verstärkten spontanen Emission ermittelt. Diese Größen, erlauben vorteilhaft neben der Ermittlung des OSNR weitere Aussagen über die Übertragungsqualität, wie beispielsweise die Augenöffnung des Augendiagramms, wodurch auch Aussagen über zusätzliche Signalverzerrungen möglich sind. Mit der Kenntnis des mittleren Rauschstromes der verstärkten spontanen Emission kann ferner das Leistungsmanagement innerhalb des Übertragungssystems verbessert werden.

In einer weiteren Ausführungvariante wird die Rechenvorschrift des Zusammenhangs zwischen der optimalen Entscheiderschwelle in Abhängigkeit von dem hinzugefügten Rauschstrom basierend auf dem Gaußschen Rauschmodell vorgegeben. Auf diese Weise ist das erfindungsgemäße Verfahren vorteilhaft vielfach einsetzbar, da es sich bei dem Gaußmodell um das am häufigsten verwendete Rauschmodell handelt.

Weitere vorteilhafte Ausbildungen der Erfindung sind in den Unteransprüchen sowie in den Ausführungsbeispielen angegeben.

Die Erfindung wird nun anhand von Ausführungsbeispielen unter Zuhilfenahme der Figuren erläutert.

Es zeigen

Fig. 1a, 1b    eine graphische Darstellung der optimalen Ent- scheiderschwelle in Abhängigkeit vom hinzugefüg- ten Rauschstrom für unterschiedliche Extinkti- onsverhältnisse

Fig. 2    eine Tabelle der mittels Regression ermittelten OSNR-Werte im Vergleich zu den realen OSNR- Werten für unterschiedliche Augenöffnungen

Fig. 3 - 7    Blockschaltbilder verschiedener Anordnungen zur Ermittlung des OSNR

Die erfindungsgemäße Bestimmung des optischen Signal-Rausch-Verhältnisses basiert auf der Erkenntnis, dass im Empfänger die optimale Entscheiderschwelle, je nach verwendetem Rauschmodell, in charakteristischer, vom OSNR abhängiger Weise variiert, wenn einem opto-elektrisch gewandelten Datensignal vor dem Entscheider ein definierter Rauschstrom hinzugefügt wird. Das hinzugefügte elektrische Rauschen beeinflusst die Varianzen der Wahrscheinlichkeitsverteilungen der Signalamplituden um die Signalmittelwerte der logischen Eins und der logischen Null. Die Form dieser Verteilungen der Signalamplituden um die Signalmittelwerte hängt von der Statistik der Rauschquellen für die Signalfluktuationen ab. Häufig werden Gaußsche Normalverteilungen angenommen. Die Varianzen dieser Gaußverteilungen entsprechen den Stromfluktuationen am Ausgang einer Photodiode, die durch das Rauschen hervorgerufen werden. Da beim optisch verursachten Rauschen die Varianz der Verteilung um den Signalmittelwert der Null stets schmäler ist als die Varianz der Verteilung um den Signalmittelwert der Eins, ist die relative Breitenänderung der Verteilung um den Signalmittelwert der Null im Vergleich zu der relativen Breitenänderung der Verteilung um den Signalmittelwert der Eins größer. Die Verteilung um den Signalmittelwert der Null wird demnach stärker von dem hinzugefügten elektrischen Rauschen beeinflusst als die Verteilung um den Signalmittelwert der Eins. Dadurch verschiebt sich die optimale Entscheiderschwelle, für die im Folgenden stets eine minimale Bitfehlerrate (BER) vorausgesetzt wird. Die Variation der Entscheiderschwelle in Abhängigkeit vom hinzugefügten Rauschstrom ist für jeden OSNR-Wert charakteristisch. Auf diese Weise kann das OSNR bestimmt werden, wenn der Zusammenhang zwischen dem hinzugefügten Rauschen und der optimalen Entscheiderschwelle bekannt ist.

Im Folgenden wird anhand eines Ausführungsbeispiels der Zusammenhang zwischen dem hinzugefügten elektrischen Rauschen und der optimalen Entscheiderschwelle hergeleitet. Die theoretischen Grundlagen sind der Fachliteratur optischer Übertragungssysteme wie beispielsweise dem Buch von G. P. Agraval: "Fiber-Optic Communication Systems", Second Edition, John Wiley & Sons, New York, 1997 zu entnehmen.

Aus dem genannten Buch von Agraval ist aus Gl. (4.5.8), Kap. 4.5.1 eine Gleichung für die optimale Entscheiderschwelle bekannt:

$$I_D = \frac{I_1 \cdot \sigma_0 + I_0 \cdot \sigma_1}{\sigma_0 + \sigma_1} \tag{1}$$

In Gl. 1 bezeichnen

$I_0$    den Photodiodenstrom für den Signalmittelwert der logi- schen Null (auch als Signalstrom der logischen Null bezeichnet)

$I_1$    den Photodiodenstrom für den Signalmittelwert der logi- schen Eins (auch als Signalstrom der logischen Eins bezeichnet)

$\sigma_0$    die Varianz der Gaußschen Wahrscheinlichkeitsverteilung der Signalamplituden um den Signalmittelwert der logischen Null (entspricht dem Rauschstrom des logischen Null- Signals)

$\sigma_1$    die Varianz der Gaußschen Wahrscheinlichkeitsverteilung der Signalamplituden um den Signalmittelwert der logischen Eins (entspricht dem Rauschstrom des logischen Eins- Signals).

Hier wurde ebenfalls das in der Literatur weit verbreitete Gauß'sche Rauschmodell zugrunde gelegt, bei dem der Einfluss von linearen und nichtlinearen Verzerrungen auf die Verteilungen der Signalamplituden um die Signalmittelwerte Null und Eins nicht berücksichtigt wird.

Der Photostrom, der in einer Photodiode einer optischen Empfangseinheit generiert wird, weist analog zum optischen Signal Fluktuationen auf, die auf das optische Rauschen zurückzuführen sind. Zusätzlich treten am Ausgang der Photodiode Interferenzrauschterme auf wie beispielsweise das Interferenzrauschen zwischen verstärkter spontaner Emission (ASE) und dem Signal oder das Interferenzrauschen der ASE mit sich selbst. Die Rauschstromquadrate, die ja gerade den Varianzen der Verteilungen der Signalamplituden entsprechen (es gilt : $\sigma^2 = \langle (\Delta I)^2 \rangle$) setzen sich aus unterschiedlichen Rauschbeiträgen zusammen, die jeweils statistisch unabhängig voneinander sind. In optischen Weitverkehrssystemen, in denen in der Regel ein optischer Verstärker (Preamplifier) vor der Empfangseinheit angeordnet ist, dominiert an der Photodiode der Rauschterm, der durch das Interferenzrauschen von Signal und verstärkter spontaner Emission (ASE) des optischen Verstärkers verursacht ist:

$$\sigma^2_{SIG-ASE} = 2e^2 G \cdot F_n \cdot P_{SIG} \cdot B_e \,/(h \cdot f) \ . \qquad (2)$$

In geringerem Maße tritt auch ein Rauschterm auf, der durch Interferenz der ASE mit sich selbst verursacht ist:

$$\sigma^2_{ASE-ASE} = e^2 \cdot (G \cdot F_n)^2 \cdot B_e \cdot B_o \qquad (3)$$

Hierbei bezeichnen die Größen

e    die Elementarladung

G    den Gewinn des der Photodiode vorgeschalteten optischen Verstärkers

$F_n$    die Rauschzahl des optischen Verstärkers

$P_{sig}$    das verstärkte optische Datensignal am Ausgang des optischen Verstärkers

$B_e$    die effektive elektrische Bandbreite der Photodiode in- klusive der nachfolgenden elektrischen Bauteile und Ver- stärker

$B_0$    die effektive optische Filterbandbreite und

h*f    die Energie eines Photons.

Erfindungsgemäß wird dem Photostrom I ein definierter Rauschstrom x hinzugefügt. Dies bedeutet, dass die Varianzen der Gaußschen Wahrscheinlichkeitsverteilungen um den Signalmittelwert der logischen Null und Eins gleichermaßen durch das hinzugefügte Rauschen beeinflusst werden.

Da die Rauschterme statistisch voneinander unabhängig sind lassen sich durch Addition der einzelnen Rauschterme die Varianzen der Gaußschen Wahrscheinlichkeitsverteilungen um den Signalmittelwert der logischen Null und Eins herleiten:

Es gilt:

$$\sigma^2_0 = \sigma^2_{SIG-ASE} + \sigma^2_{ASE-ASE} + x^2$$

und

$$\sigma_1^2 = \sigma_{SIG-ASE}^2 + \sigma_{ASE-ASE}^2 + x^2$$

Unter der Annahme, die die Gültigkeit der nachstehenden Formeln im Hinblick auf das Ziel der Berechnungen nicht einschränkt, dass jedes auf den Detektor treffende Photon ein Photoelektron auslöst, können die Rauschstrom-quadrate $\sigma_{SIG-ASE}^2$ und $\sigma_{ASE-ASE}^2$ mit Hilfe der Photodiodenströme

$$I_{SIG} = P_{SIG} \cdot \frac{e}{h \cdot f} \quad \text{und} \quad I_{ASE} = F_n \cdot G \cdot B_o \cdot e$$

ausgedrückt werden und es ergeben sich somit für die Rauschbeiträge aus Gl. (2) und (3):

$$\sigma_{SIG-ASE}^2 = 2 I_{SIG} \cdot I_{ASE} \cdot \frac{B_e}{B_o} = 2\gamma \cdot I_{ASE} \cdot I_{SIG}$$

$$\sigma_{ASE-ASE}^2 = I_{ASE}^2 \cdot \frac{B_e}{B_o} = \gamma \cdot I_{ASE}^2$$

Dabei bezeichnet $\gamma = \frac{B_e}{B_o}$ das Verhältnis aus der effektiven elektrischen Bandbreite am Empfänger $B_e$ zu einer effektiven optischen Filterbandbreite $B_o$.

Werden nun für den Signalstrom $I_{SIG}$ die jeweiligen Photodiodenströme für eine empfangene logische Eins $I_1$ und für eine empfangene Null $I_0$ eingesetzt, so erhält man für die Varianzen der Gaußschen Wahrscheinlichkeitsverteilungen um den Signalmittelwert der logischen Null und Eins:

$$\sigma_0 = \sqrt{2\gamma I_0 I_{ASE} + \gamma \cdot I_{ASE}^2 + x^2} \qquad (4)$$

und

$$\sigma_1 = \sqrt{2\gamma I_1 I_{ASE} + \gamma I_{ASE}^2 + x^2} \qquad (5)$$

Einsetzen der Formeln (4) und (5) in Gleichung (1) ergibt eine Formel für die optimale Entscheiderschwelle $I_D$ in Abhängigkeit von einem hinzugefügten Rauschstrom x:

$$I_D(x) = \frac{I_1 \cdot \sqrt{2\gamma I_0 I_{ASE} + \gamma \cdot I_{ASE}^2 + x^2} + I_0 \cdot \sqrt{2\gamma I_1 I_{ASE} + \gamma \cdot I_{ASE}^2 + x^2}}{\sqrt{2\gamma I_0 I_{ASE} + \gamma \cdot I_{ASE}^2 + x^2} + \sqrt{2\gamma I_1 I_{ASE} + \gamma \cdot I_{ASE}^2 + x^2}} \qquad (6)$$

Für vernachlässigbares elektrisches Rauschen (x->0) geht die Formel für die optimale Entscheiderschwelle von Gl. (6) in Gl. (1) über. In diesem Fall liegt nur optisches Rauschen vor. Für sehr große hinzugefügte Rauschströme (x->∞) nähert sich Gl. (6) dem Ausdruck $(I_1+I_0)/2$ an, was dem Fall entspricht, dass die Entscheiderschwelle genau in der Mitte zwischen den Signalmittelwerten der logischen Null und Eins liegt. In diesem Fall ist das optische Rauschen vernachlässigbar.

Gleichung (6) für die optimale Schwelle ID(x) enthält drei unbekannte Größen $I_0$, $I_1$ und $I_{ASE}$. Wird die optimale Entscheiderschwelle $I_D(x)$ für drei unterschiedliche hinzugefügte Rauschströme $x_i$ (i = 1,2,3) gemessen, so lassen sich die drei unbekannten Größen $I_0$, $I_1$ und $I_{ASE}$ bestimmen.

Anhand der Größen $I_0$, $I_1$ und $I_{ASE}$ lässt sich in einem nächsten Schritt das OSNR ausrechnen. Da hinter der Photodiode weiterhin der mittlere Photodiodenstrom <I> bekannt ist, der sich aus einem mittleren Signalstrom $<I_{SIG}>$ und einem durch ASE verursachten Strom $<I_{ASE}>$ zusammensetzt, kann das OSNR folgendermaßen berechnet werden:

$$OSNR = \frac{\langle I_{SIG}\rangle}{\langle I_{ASE}\rangle} = \frac{\langle I\rangle - \langle I_{ASE}\rangle}{\langle I_{ASE}\rangle} \qquad (7)$$

Bei Gleichverteilung der Werte von $I_0$ und $I_1$ ist der mittlere Signalstrom $<I_{SIG}>$ mit $<I_0+I_1>/2$ identisch.

Das Vorgehen zur Bestimmung des OSNR und der Photodiodenströme der Signalmittelwerte der logischen Null und Eins $I_0$ und $I_1$ ist demnach folgendermaßen:

1) Einfügen eines innerhalb der elektrischen Bandbreite weißen Rauschens vor dem Entscheider mit hinzugefügten Rauschströmen $x_i$ vorzugsweise aus dem Intervall {x: <I>/10 < x < <I>*10}, wobei die Breite des Intervalls möglichst genutzt werden sollte, und Bestimmung der zugehörigen optimalen Entscheiderschwellen $I_D(x_i)$ für mindestens drei Rauschströme (i>=3).
2) Ermittlung der unbekannten Größen $I_0$, $I_1$ und $I_{ASE}$ gemäß Gl. (6)
3) Bestimmung des OSNR aus Gl. (7)

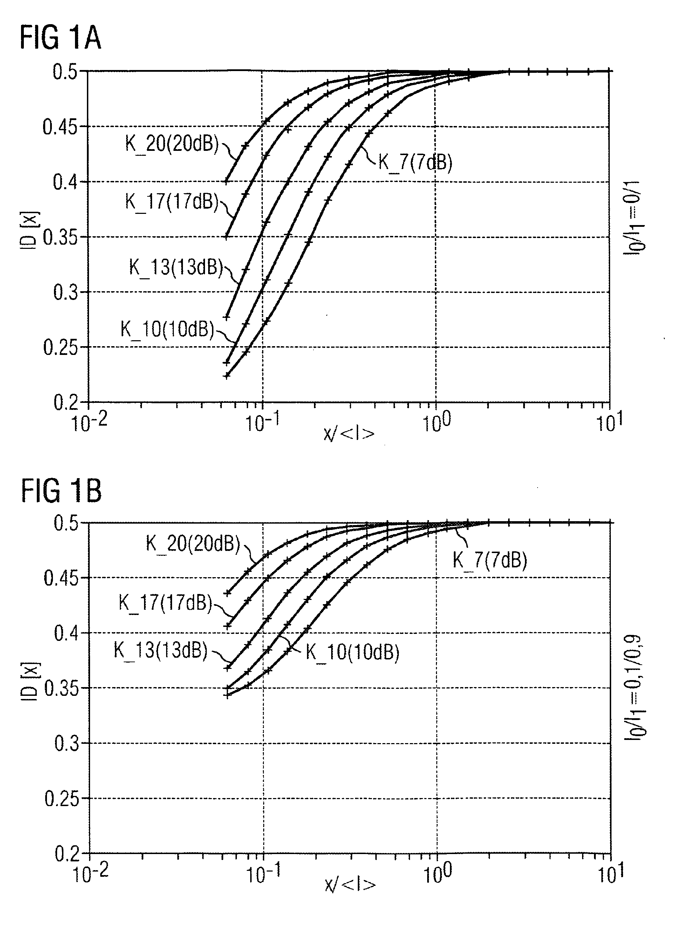

Die Graphen in Fig. 1a und 1b zeigen zur Demonstration des erfindungsgemäßen Verfahrens die Abhängigkeit der optimalen Entscheiderschwelle $I_D(X_i)$ von hinzugefügten Rauschströmen $x_i$. In den gezeigten Simulationen wurden typische Werte für $I_0$, $I_1$ und $I_{ASE}$ und $\gamma = B_e/B_0$ vorgegeben, wobei der mittlere Photodiodenstrom <I> hier als Mittelwert aus $I_0$ und $I_1$ angenommen wurde ($<I>= (I_0+I_1)/2$). Auch die Werte für verschiedene OSNR sind mit 7, 10, 13, 17 und 20 dB vorgegeben. In Fig. 1a beträgt das Verhältnis $I_0/I_1 = 0,1/0,9$, in Fig. 1b wird für $I_0/I_1$ ein Verhältnis von 0,2/0,8 angenommen. Bei dem Verhältnis $I_0/I_1$ handelt es sich um das so genannte Extinktionsverhältnis, das als Verhältnis aus den zeitlichen Mittelwerten des Photodiodenstroms bei der logischen Null und der logischen Eins definiert ist. Es gibt in etwa die innere Augenöffnung im Abtastzeitfenster des Entscheiders an. Die hinzugefügten Rauschströme sind hier auf den mittleren Photodiodenstrom <I> normiert. Die Rauschströme wurden zwischen den Werten <I>/10 und <I>*10 variiert. Es ist deutlich zu erkennen, dass die Entscheiderschwelle mit zunehmendem hinzugefügten elektrischen Rauschen zunimmt und sich dem Grenzwert 0,5 annähert, bei dem das optische Rauschen vernachlässigbar ist und überwiegend elektrisches Rauschen vorliegt. Werden die einzelnen Punkte $I_D(x_i)$ miteinander verbunden, wird für jedes OSNR ein eigener funktionaler Zusammenhang zwischen der optimalen Entscheiderschwelle und dem hinzugefügten Rauschstrom deutlich.

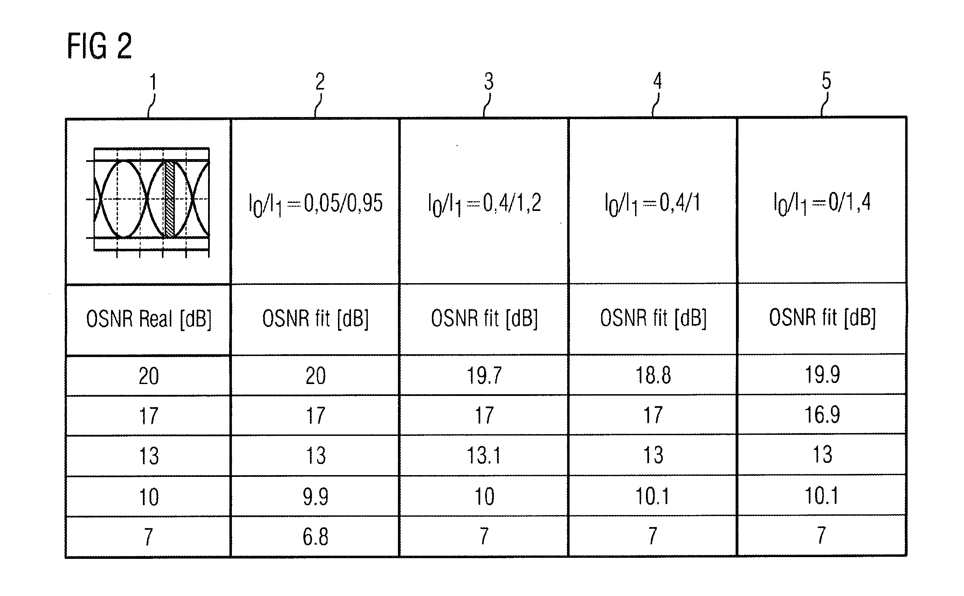

In einem weiteren Beispiel zur Demonstration des erfindungsgemäßen Verfahrens wurden die Wertepaare ($X_i$, $I_D(x_i)$) vorgegeben und die Werte für die Größen $I_0$, $I_1$ und $I_{ASE}$ wurden mittels einer numerischen Anpassung ermittelt, um daraus entsprechend Gl. (7) das OSNR zu berechnen. Als Startwerte für das Fitverfahren wurden $I_0$ initial = <I>/10, $I_1$ initial = <I>*2 und $I_{ASE}$ initial = <I>/10 verwendet. Ferner sollten die resultierenden Werte für $I_0$ und $I_1$ den Randbedingungen unterschiedlicher Extinktionsverhältnisse genügen. Die Ergebnisse der durchgeführten Simulationen sind in der Tabelle von Fig. 2 aufgelistet. In der ersten Spalte sind die "realen" OSNR-Werte aufgetragen, die den verwendeten Wertepaaren zu Grunde liegen. In den Spalten 2 bis 5 sind jeweils für unterschiedliche Extinktionsverhältnisse die aus der numerischen Anpassung erhaltenen Werte für das OSNR angegeben. In Spalte 2 beträgt das Extinktionsverhältnis $I_0/I_1 = 0,05/0,95$, was einem Augendiagramm mit großer Öffnung entspricht. In Spalte 3 ist das Extinktionsverhältnis

$I_0/I_1$ = 0,4/1,2 relativ klein. In diesem Fall ist im Augendiagramm die Augenöffnung bereits deutlich geschlossen. In Spalte 4 beträgt das Extinktionsverhältnis $I_0/I_1$ = 0,4/1. Dies bedeutet, dass sich die Augenöffnung im Augendiagramm von den unteren Werten her schließt. In Spalte 5 besitzt das Augendiagramm bei einer Extinktion von $I_0/I_1$ = 0/1,4 einen Überschwinger. Die in der Tabelle aufgelisteten OSNR-Werte zeigen, dass die mittels der numerischen Anpassung berechneten OSNR Werte gut mit den 'realen' Werten übereinstimmt. Ferner demonstrieren die Werte aus Fig. 2 die Unabhängigkeit der Methode von auftretenden Signalverzerrungen.

Grundsätzlich gilt für das erfindungsgemäße Verfahren: Bei einer exakten Messung müssen aufgrund der drei unbekannten Größen aus Gl. (6) drei Messpunkte ausreichen. Die Genauigkeit der Methode kann natürlich durch eine größere Anzahl von Messpunkten und durch mehrfache Durchführung der Messungen und Mittelung der Ergebnisse bzw. einen Fit der unbekannten Größen ($I_0$, $I_1$ und $I_{ASE}$) mit Hilfe der Gl. (6) deutlich verbessert werden. Weiterhin ist das Gaußmodell keine Voraussetzung für die prinzipielle Funktionsweise des erfindungsgemäßen Verfahrens. Andere Rauschmodelle sind ebenfalls zulässig. Lediglich die Formeln für die Auswerteprozeduren müssen entsprechend des verwendeten Rauschmodells angepasst werden. Wesentlich für das Funktionieren des Verfahrens ist allein, dass die Varianzen der Verteilungen der Signalamplituden um die Signalmittelwerte der logischen Null und Eins von der elektrisch hinzugefügten Rauschleistung abhängig vom OSNR unterschiedlich beeinflusst werden.

Zur Realisierung des erfindungsgemäßen Verfahrens sind in den Figuren 3 bis 7 unterschiedliche Ausführungsvarianten angegeben.

Das Blockschaltbild aus Fig. 3 zeigt eine erste Anordnung zur Bestimmung des OSNR. Ein optisches Datensignal 1 wird einer optischen Wandlungseinheit OE zugeführt. Diese umfasst beispielsweise eine Photodiode PD mit nachgeschaltetem elektrischen Verstärker AGC. Von der Photodiode PD führt ein erstes Signal 11 zu einer Steuer- und Auswerteeinheit SAE. Ein zweites Signal 2 wird dem elektrischen Verstärker AGC zugeführt, der neben einem ersten Eingang für das Signal 2 einen zweiten Eingang für ein von der Steuer- und Auswerteeinheit SAE abgegebenes erstes Steuersignal 15 aufweist. Das von dem elektrischen Verstärker AGC abgegebene elektrische Datensignal 3 wird einem ersten Eingang eines Addierers ADD zugeführt. Der zweite Eingang des Addierers ADD ist mit einer Rauschquelle RQ verbunden, die dem Addierer ADD einen Rauschstrom 20 zuführt. Die Rauschquelle RQ erhält ein zweites Steuersignal 16 von der Steuer- und Auswerteeinheit SAE. Der Ausgang des Addierers ADD führt das mit Rauschen versehene Datensignal 4 einem ersten Eingang einer Taktrückgewinnungs- und Entscheider-Einheit CDR zu, die an ihrem zweiten Eingang ein drittes Steuersignal 17 von der Steuer- und Auswerteeinheit SAE erhält. Vom Ausgang der Taktrückgewinnungs- und Entscheider-Einheit CDR wird das entschiedene Datensignal 5 einer Fehlerkorrektur-Einheit FEC zugeführt, die an ihrem ersten Ausgang das korrigierte und entschiedene Datensignal 6 und an ihrem zweiten Ausgang ein zweites Signal 12 an die Steuer- und Auswerteeinheit SAE abgibt.

Das optische Signal 1, das sich aus der ASE und dem eigentlichen Datensignal zusammensetzt, wird einer optischen Wandlungsseinheit OE zugeführt, die in dem in Fig. 3 dargestellten Ausführungsbeispiel eine Photodiode PD mit nachgeschaltetem elektrischen Verstärker AGC umfasst. In der Photodiode PD wird das optische Datensignal 1 opto-elektrisch gewandelt. Da der in der Photodiode PD generierte Photostrom für die Berechnung des OSNR notwendig ist, wird ein erstes Signal 11, das dem gemittelten Photostrom <I> entspricht, an die Steuer-und Auswerteeinheit SAE abgegeben. Das opto-elektrisch gewandelte Datensignal 2 wird anschließend dem elektrischen Verstärker AGC zugeführt, wo der Pegel des gewandelten elektrischen Signals 2 passend für die nachfolgende Taktrückgewinnungs- und Entscheider-Einheit CDR eingestellt wird. Die Pegeleinstellung erfolgt entsprechend der Vorgabe aus der Steuer- und Auswerteeinheit SAE über das erste Steuersignal 15. Zu beachten ist, dass, wenn ein optischer Vorverstärker vorhanden ist, das elektrische Rauschen des Verstärkers AGC vernachlässigbar ist. Im analog ausgestalteten Addierer ADD werden dem elektrischen Datensignal 3 definierte Rauschströme $x_i$ hinzugefügt. Die Rauschströme $x_i$ werden in der Rauschquelle RQ generiert. Die Rauschquelle RQ wird über ein zweites Steuersignal 16 entsprechend der Vorgabe aus der Steuer- und Auswerteeinheit SAE gesteuert. Die Taktrückgewinnungs- und Entscheider-Einheit CDR mit der nachgeschalteten Fehlerkorrektur-Einheit FEC bilden zusammen mit Teilen der Steuer- und Auswerteeinheit SAE einen Funktionsblock zur Ermittlung der optimalen Entscheiderschwelle $I_D$ ($x_i$). Die Taktrückgewinnungs- und Entscheider-Einheit CDR (engl. clock data recovery, abgekürzt CDR) umfasst im Wesentlichen einen Entscheider-Schaltkreis und eine Taktrückgewinnung. Im Entscheider-Schaltkreis ist ein Schwellwertschalter enthalten. Der Entscheider-Schaltkreis vergleicht den Pegel des ankommenden Signals mit einem Schwellwert zu bestimmten Abtastzeitpunkten, die von der Taktrückgewinnung geliefert werden und entscheidet, ob es sich bei dem abgetasteten Wert um eine Logische Null oder Logische Eins handelt. Dies bedeutet, dass die Taktrückgewinnungs- und Entscheider-Einheit CDR bereits eine Entscheiderschwelle und einen Abtastzeitpunkt liefert und an die Steuer- und Auswerteeinheit SAE über das Signal 17a abgibt. Das entschiedene Signal wird anschließend der Fehlerkorrektur-Einheit FEC zugeführt. In dieser werden vorhandene Bitfehler, die während der Übertragung und nun auch aufgrund des hinzugefügten Rauschstromes auftreten, korrigiert. Die Anzahl der von der FEC korrigierten Bits ist ein direktes Maß für die Bitfehlerrate (BER) und wird an die Steuer- und Auswerteeinheit SAE über das Fehlerkorrektursignal 12 abgegeben. Die Steuer- und Auswerteeinheit SAE stellt nun innerhalb einer Regelschleife über Signal 17b die Entscheiderschwelle und den Abtastzeitpunkt in der CDR derart ein, dass die Anzahl der durch die FEC ermittelten fehlerhaften Bits und damit die Bitfehlerrate minimal wird. Auf diese Weise wird eine optimale Entscheiderschwelle ermittelt. Die Steuer- und Auswerteeinheit SAE berechnet mittels der zugeführten und eingestellten Werte das OSNR 50 und gibt es an ein übergeordnetes System-Management ab.

Das Blockschaltbild aus Fig. 4 zeigt eine zweite Anordnung zur Bestimmung des OSNR. Diese umfasst wie in Fig. 3 eine optische Wandlungsseinheit OE, die mittels der Photodiode PD eine opto-elektrische Wandlung des zugeführten optischen Datensignals 1 mit definiertem Ausgangspegel erlaubt. Der mittlere Pegel des Ausgangssignals 2 der Photodiode wird hier ebenfalls mittels eines elektrischen Verstärkers AGC auf einen vorgegebenen Wert eingestellt. Anschließend wird das elektrische Datensignal 3 an der ersten Verzweigestelle Z1 in ein Referenzsignal 20 und in ein Teilsignal 30 aufgeteilt. Das Referenzsignal 20 wird in der Taktrückgewinnungs- und Entscheider-Einheit CDR ausgewertet und regeneriert. Im Entscheider-Schaltkreis der Taktrückgewinnungs- und Entscheider-Einheit CDR werden zu den von der Taktrückgewinnung vorgegebenen Abtastzeitpunkten die Amplituden des Datensignals auf einen Null- oder Einspegel gesetzt. Das derart entschiedene Datensignal 21 wird einer Fehlerkorrektur-Einheit FEC zugeführt, die an ihrem ersten Ausgang ein fehlerfreies entschiedenes Datensignal 22 abgibt. Hinter der Fehlerkorrektur-Einheit FEC befindet sich eine zweite Verzweigestelle Z2, über die ein Teilsignal 26 des fehlerkorrigierten entschiedenen Datensignals 22 einer Vergleichseinheit XOR zugeführt wird. Dem hinter der ersten Verzweigestelle Z1 abgezweigten Teilsignal 30 werden über den Addierer ADD definierte Rauschströme $x_i$ hinzugefügt, die in der Rauschquelle RQ erzeugt werden. Der Rauschstrom $x_i$ wird an der Rauschquelle RQ über das Steuersignal 16 von der Steuer- und Auswerteeinheit SAE eingestellt. Das mit elektrischem Rauschen überlagerte Datensignal 31 wird anschließend einem Entscheider D zugeführt. Die Abtastzeitpunkte des Entscheider-Schaltkreises D werden von der Taktrückgewinnung der Taktrückgewinnungs- und Entscheider-Einheit CDR über das Taktsignal 25 vorgegeben. Dies ist unbedingt erforderlich, damit in der nachfolgenden Vergleicheinheit XOR ein bitweiser Vergleich der entschiedenen Datensignale 32 und 26 stattfinden kann. Außerdem ist durch die Zuführung des Taktsignals im Entscheider D keine eigene Taktrückgewinnung notwendig. Im Entscheider D ist allein eine Einheit zur Phasenanpassung des Datensignals für den optimalen Abtastzeitpunkt ausreichend, was kostengünstiger als eine eigene Taktrückgewinnung ist. Die Vergleichseinheit, die beispielsweise ein XOR-Glied umfasst, liefert eine logische Null, wenn die am Eingang anliegenden, zu vergleichenden Werte gleich sind. Demnach ist das am Ausgang des XOR-Gliedes abgegebene Signal 40 minimal, wenn das fehlerfrei entschiedene Signal 26 mit dem aufgrund des zugefügten Rauschens fehlerbehafteten Signal 32 möglichst übereinstimmt. Die Steuer- und Auswerteeinheit SAE kann nun anhand der Information des XOR-Glieds die optimale Entscheiderschwelle ermitteln und dem Entscheider D über das Steuersignal 18 mitteilen. Die Optimierung der Entscheiderschwelle für den Entscheider D erfolgt in diesem Ausführungsbeispiel demnach durch Minimieren der Fehler beim bitweisen Vergleich der Signale des Entscheiderzweigs ohne Zusatzrauschen und des Entscheiderzweigs mit Zusatzrauschen. Die Entscheiderschwelle $I_D$ des oberen Entscheiderzweigs ohne Zusatzrauschen wird anhand der von der FEC gelieferten Anzahl der Fehler (Signal 12) optimal über Signal 17 eingestellt. Die Entscheiderschwelle $I_D$ $(x_i)$ des Entscheiders D wird in Abhängigkeit vom Ergebnis des XOR-Glieds über Signal 18 eingestellt. Auf diese Weise kann von der Steuer-und Auswerteeinheit SAE ein funktionaler Zusammenhang zwischen dem hinzugefügten Rauschstrom und der optimalen Entscheiderschwelle für den Entscheider D ermittelt werden. Die Ausführung mit dem XOR-Glied ist eine einfache Schaltung, um Korrelationen zu messen. Statt des XOR-Gliedes kann auch ein beliebiger Korrelator eingesetzt werden.

Die in Fig. 4 dargestellte Ausführungsvariante besitzt im Vergleich zu der Ausführungsvariante aus Fig. 3 den Vorteil, dass die optimale Entscheiderschwelle auch für höhere Bitfehlerraten ermittelt werden kann. Wenn in der Anordnung aus Fig. 3 durch das Hinzufügen von Rauschen zum Datensignal die Anzahl der auftretenden Fehler so groß wird, dass sie von der Fehlerkorrektur-Einheit FEC nicht mehr korrigiert werden können, kann die Realisierungsvariante aus Fig. 4 eingesetzt werden, die auch bei hohen Fehlerraten funktioniert. In Fig. 4 wird vorteilhaft das Datensignal, das als Referenzsignal für den Vergleich im XOR-Glied dient, nicht durch das Hinzufügen von Rauschen gestört. Dadurch ist stets ein optimaler Betrieb der Schaltung gewährleistet.

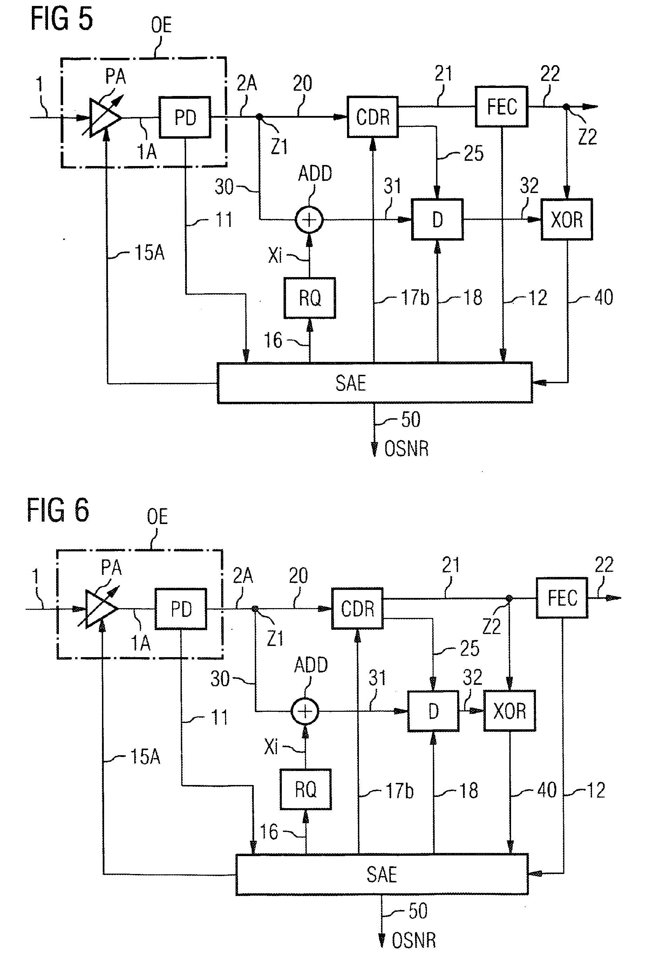

Die im Blockschaltbild von Fig. 5 dargestellte Anordnung zur Bestimmung des OSNR weist im Vergleich zu der Anordnung aus Fig. 5 eine optische Wandlungseinheit OE auf, die einen optischen Verstärker PA mit nachgeschalteter Photodiode PD umfasst. Das optische Signal 1 wird hier im optischen Vorverstärker PA (engl. Preamplifier) auf einen von der Steuer- und Auswerteeinheit SAE über das Steuersignal 15A vorgegebenen Wert verstärkt. Dieser Wert ist von den Erfordernissen der Entscheider-Schaltkreise innerhalb der Taktrückgewinnungs- und Entscheider-Einheit CDR und innerhalb des Entscheiders D abhängig. Das derart vorverstärkte optische Signal 1A wird anschließend in der Photodiode PD opto-elektrisch gewandelt. Statt des eingezeichneten optischen Verstärkers PA kann auch ein optischer Abschwächer verwendet werden. Neben einer Pegeleinstellung des optischen Signals ist auch eine Kombination der Pegelregelung vor und hinter der Photodiode denkbar. Das Einfügen optischer oder elektrischer Filter im Bereich der optischen Wandlungsseinheit OE zur Begrenzung von Bandbreiten und Rauschen des optischen oder elektrischen Signals ist ebenfalls möglich.

In Fig. 6 ist eine Variante einer Anordnung zur Bestimmung des OSNR gezeigt, in welcher der Vergleich zwischen den Signalen des Entscheiderzweigs ohne Zusatzrauschen und den Signalen des Entscheiderzweigs mit Zusatzrauschen stattfindet, bevor das entschiedene Datensignal 21 die Fehlerkorrektur- Einheit FEC durchläuft. Die Anzahl der in der Fehlerkorrektur-Einheit FEC korrigierten Bits wird in der Steuer- und Auswerteeinheit SAE wie in den vorigen Ausführungsvarianten zum Optimieren der Entscheiderschwelle und des Abtastzeitpunkts der Taktrückgewinnungs- und Entscheider-Einheit CDR eingesetzt. Dazu wird die Anzahl der korrigierten Bits der Steuer- und Auswerteeinheit SAE über Signal 12 übermittelt.

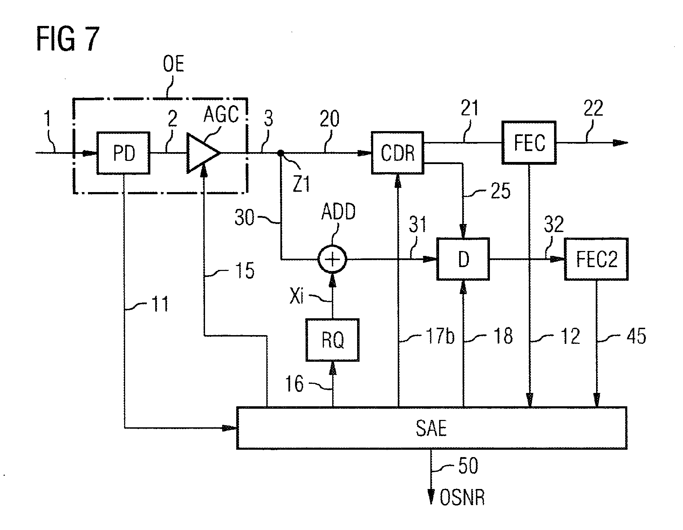

In Fig. 7 ist eine Variante einer Anordnung zur Bestimmung des OSNR gezeigt, in welcher statt der Vergleichseinheit XOR eine zweite Fehlerkorrektur-Einheit FEC2 verwendet wird, die ein zweites Fehlerkorrektursignal 45 der Steuer- und Auswerteeinheit SAE zuführt. Die in Fig. 7 dargestellte Ausführungsvariante stimmt im Wesentlichen mit der aus Fig. 4 überein. Die Optimierung der Entscheiderschwelle für den Entscheider D erfolgt in diesem Ausführungsbeispiel jedoch über die zweite Fehlerkorrektur-Einheit FEC2. Die Entscheiderschwelle $I_D$ des oberen Entscheiderzweigs ohne Zusatzrauschen wird anhand der von der ersten Fehlerkorrektur-Einheit FEC gelieferten Anzahl der Fehler (Signal 12) optimal über Signal 17 eingestellt.

Ferner ist zu bemerken, dass eine Fehlerkorrektureinheit FEC nicht notwendig ist, wenn andere Methoden zur Fehlerkorrektur bzw. Fehlermessung vorhanden sind, um die optimale Entscheiderschwelle zu ermitteln. Zur Ermittlung der optimalen Entscheiderschwelle kann man im Prinzip beispielsweise bei Signalformaten wie SDH- und Sonet-Signalen anstelle eines Fehlerausganges der FEC-Einheit die entsprechenden Fehlerbytes im Rahmensignal auswerten. Diese Methode ist aber langsamer und ein extra SDH-Chip ist viel teurer als ein FEC Baustein. Außerdem muss dann die Demultiplexer-Einheit des Empfängers mit einbezogen werden und die Anordnung ist bezüglich des Datenformats nicht mehr flexibel. Werden über eine im Rahmen enthaltene Fehlerkorrektur bzw. Fehlermessung die optimalen Schwellen ermittelt, müssen allerdings Fehler vorhanden sein, was im Ausführungsbeispiel von Fig. 3 die Datensignale stören würde und in den anderen Ausführungen mit dem Parallelzweig deutlich höhere Kosten zur Folge hätte.

## Patentansprüche

1. Verfahren zur.Bestimmung des optischen Signal-Rausch-Verhältnisses für ein optisches Übertragungssystem, aufweisend die Schritte,

   dass empfangsseitig ein übertragenes optisches Datensignal (1) opto-elektrisch in ein elektrisches Datensignal (3,30) gewandelt wird,

   dass dem elektrischen Datensignal (3,30) Rauschströme ($x_i$) mit mindestens drei verschiedenen Werten hinzugefügt werden, dass für jeden hinzugefügten Rauschstrom ($x_i$) eine optimale Entscheiderschwelle ($I_D$ ($x_i$)) für ein mit diesem Rauschstrom ($x_i$) versehenes elektrisches Datensignal (4, 31) ermittelt wird,

   dass aus Wertepaaren, die aus dem hinzugefügten Rauschstrom ($x_i$) und der entsprechenden optimalen Entscheiderschwelle ($I_D$ ($x_i$)) besteht, nach einer, auf einem Rauschmodell basierenden Rechenvorschrift Werte für einen mittleren Signalstrom ($I_{SIG}$) und einen mittleren Rauschstrom der verstärkten spontanen Emission ($I_{ASE}$) ermittelt werden,

   dass aus dem Quotienten aus dem mittleren Signalstrom ($I_{SIG}$) und dem mittleren Rauschstrom der verstärkten spontanen Emission ($I_{ASE}$) das optische Signal-Rausch-Verhältnis (OSNR) ermittelt wird.

2. Verfahren nach Anspruch 1,
   **dadurch gekennzeichnet,**
   **dass** für das mit dem Rauschstrom ($x_i$) versehene elektrische Datensignal (4) ein Signalwert einer logischen Eins oder einer logischen Null entschieden wird,
   **dass** auftretende Fehler der Signalwerte korrigiert werden und die Anzahl der korrigierten Fehler ermittelt wird, und dass durch Minimierung der mittels der korrigierten Fehler ermittelten Fehlerrate die optimale Entscheiderschwelle ($I_D(x_i)$) ermittelt wird.

3. Verfahren nach Anspruch 1,
   **dadurch gekennzeichnet,**
   **dass** durch Maximierung einer Korrelation zwischen einem entschiedenen, mit dem Rauschstrom ($x_i$) versehenen elektrischen Datensignal (32) und einem entschiedenen ohne Rauschstrom ($x_i$) versehenen elektrischen Datensignal (21) die optimale Entscheiderschwelle ($I_D(x_i)$) ermittelt wird.

4. Verfahren nach Anspruch 1,
   **dadurch gekennzeichnet,**
   **dass** die hinzugefügten Rauschströme ($x_i$) in einem Intervall zwischen einem Zehntel des mittleren Photostroms des elektrischen Datensignals (3,30) und einem Zehnfachen des mittleren Photostroms des elektrischen Datensignals (3,30) liegen.

5. Verfahren nach Anspruch 1,

**dadurch gekennzeichnet,**
**dass** aus dem Wertepaar des hinzugefügten Rauschstromes ($x_i$) und der optimalen Entscheiderschwelle ($I_D(x_i)$) nach einer Rechenvorschrift Werte für einen Signalstrom der logischen Eins ($1_1$), für einen Signalstrom der logischen Null ($I_0$) und den mittleren Rauschstrom der verstärkten spontanen Emission ($I_{ASE}$) ermittelt werden.

6. Verfahren nach Anspruch 1 und 5,
**dadurch gekennzeichnet,**
**dass** unter Voraussetzung des Modells für Gauß'sches Rauschen die Rechenvorschrift für die optimale Entscheiderschwelle ($I_D(x_i)$) in Abhängigkeit von dem hinzugefügten Rauschstrom ($x_i$) gleich

$$I_D(x) = \frac{I_1 \cdot \sqrt{2\gamma I_0 I_{ASE} + \gamma \cdot I_{ASE}^2 + x^2} + I_0 \cdot \sqrt{2\gamma I_1 I_{ASE} + \gamma \cdot I_{ASE}^2 + x^2}}{\sqrt{2\gamma I_0 I_{ASE} + \gamma \cdot I_{ASE}^2 + x^2} + \sqrt{2\gamma I_1 I_{ASE} + \gamma \cdot I_{ASE}^2 + x^2}}$$

ist,
wobei

$I_1$ den Signalstrom der logischen Eins darstellt,
$I_0$ den Signalstrom der logischen Null darstellt,
$I_{ASE}$ den Rauschstrom der verstärkten spontanen Emission darstellt,
$\gamma$ einen Quotienten aus einer effektiven elektrischen Bandbreite am Empfänger ($B_e$) geteilt durch eine effektive optische Filterbandbreite ($B_o$) darstellt.

7. Anordnung zur Bestimmung des optischen Signal-Rausch-Verhältnisses für ein optisches Übertragungssystem, umfassend eine Serienschaltung aus einem opto-elektrischen Wandler (PD), einem Addierer (ADD), einer Taktrückgewinnungs- und Entscheider-Einheit (CDR) und einer Fehlerkorrektur-Einheit (FEC), der eingangsseitig ein optisches Datensignal (1) zugeführt wird und die ausgangsseitig ein entschiedenes elektrisches Datensignal (6) abgibt,
bei der eine einstellbare Rauschquelle (RQ) vorgesehen ist, deren Ausgang mit dem Addierer (ADD) verbunden ist, und bei der ferner eine Steuer- und Auswerteeinheit (SAE) vorgesehen ist, die mit dem opto-elektrischen Wandler (PD), der Rauschquelle (RQ), der Taktrückgewinnungs- und Entscheider-Einheit (CDR) und der Fehlerkorrektur-Einheit (FEC) verbunden ist,
wobei die und Auswerteeinheit (SAE) derart ausgelegt ist, mittels eines vom opto-elektrischen Wandler (PD) zugeführten ersten Eingangssignals (11), eines von der Taktrückgewinnungs- und Entscheider-Einheit (CDR) zugeführten zweiten Eingangssignals (17a) und eines von der Fehlerkorrektur-Einheit (FEC) zugeführten Fehlerkorrektursignals (12) in Abhängigkeit von einem der Rauschquelle (RQ) zugeführten ersten Steuersignal (16) eine optimale Entscheiderschwell zu ermitteln und an die Taktrückgewinnungs- und Entscheider-Einheit (CDR) über ein zweites Steuersignal (17b) besagte Entscheiderschwelle abzugeben, und wobei die Steuer- und Auswerteeinheit (SAE) darauf eingestellt ist,
nach mindestens drei Einstellungen des Rauschstromes und der optimalen Entscheiderschwelle einen Wert für das optische Signal-Rausch-Verhältnis (50) zu ermitteln und ihn an das System-Management abzugeben.

8. Anordnung nach Anspruch 7,
**dadurch gekennzeichnet,**
**dass** dem opto-elektrischen Wandler (PD) eine optische Einheit zur Pegeleinstellung (PA) vorgeschaltet oder eine elektrische Einheit zur Pegeleinstellung (AGC) nachgeschaltet ist und dass diese Einheit zur Pegeleinstellung (PA, AGC) mit der Steuer- und Auswerteeinheit (SAE) verbunden ist und von dieser ein Steuersignal (15, 15A) erhält.

9. Anordnung zur Bestimmung des optischen Signal-Rausch-Verhältnisses für ein optisches Übertragungssystem, umfassend

- einen opto-elektrischen Wandler (PD), der einen Eingang für ein optisches Datensignal (1, 1A) und zwei elektrische Ausgänge aufweist, wobei der Wandler (PD) derart ausgelegt ist, das optische Datensignal (1, 1A) opto-elektrisch zu wandeln, und an seinem ersten und zweiten Ausgang ein erstes elektrisches Datensignal (2, 2A) und ein zweites elektrisches Datensignal (11) abzugeben,

- eine erste Verzweigestelle (Z1), die darauf eingestellt ist das erste elektrische Datensignal (2, 2A) am Eingang zu empfangen, und ein Referenzsignal (20) und ein erstes Teilsignal (30) an zwei jeweiligen Äusgangen abzugeben,

- eine Taktrückgewinnungs- und Entscheider-Einheit (CDR), die einen ersten Eingang für das Referenzsignal (20) aufweist und einen zweiten Eingang für ein zweites Steuersignal (17b) aufweist, und die derart ausgelegt ist, das Referenzsignal (20) zu regenerieren und zu entscheiden und an ihrem ersten Ausgang ein erstes entschiedenes Datensignal (21) und an ihrem zweiten Ausgang ein Taktsignal (25) abzugeben,

- einen Addierer (ADD), der einen ersten Eingang für das erste Teilsignal (30) aufweist und einen zweiten Eingang für ein von einer Rauschquelle (RQ) abgegebenes Rauschsignal ($x_i$) aufweist, der derart ausgelegt ist, das Rauschsignal ($x_i$) dem ersten Teilsignal (30) hinzuzufügen, und an seinem Ausgang ein mit Rauschen überlagertes elektrisches Datensignal (31) abzugeben,

- einen Entscheider (D), dessen erstem Eingang das mit Rauschen überlagerte elektrische Datensignal (31) zugeführt ist, dessen zweitem Eingang das Taktsignal (25) zugeführt ist, dessen drittem Eingang ein drittes Steuersignal (18) zugeführt ist, in dem eine optimale Entscheiderschwelle für das verrauschte elektrische Datensignal eingestellt wird und an dessen Ausgang ein zweites entschiedenes Datensignal (32) abgegeben wird,

- eine Vergleichseinheit (XOR), deren erstem Eingang das erste entschiedene Datensignal (21) zugeführt wird, deren zweitem Eingang das zweite entschiedene Datensignal (32) zugeführt wird, derart ausgelegt, die beiden Signale zu vergleichen, und an ihrem Ausgang ein Vergleichssignal (40) mit dem Vergleichsresultat abzugeben,

- eine Steuer- und Auswerteeinheit (SAE), die einen ersten Eingang für das zweite elektrische Datensignal (11) und einen zweiten Eingang für das Vergleichssignal (40) aufweist, derart ausgelegt, einen Wert für die optimale Entscheiderschwelle für die Taktrückgewinnungs- und Entscheider-Einheit (CDR) zu ermitteln und an diese über das zweite Steuersignal (17b) abzugeben, einen weiteren Wert für die optimale Entscheiderschwelle für den Entscheider (D) zu ermitteln und an diesen über das dritte Steuersignal (18) abzugeben, ein viertes Steuersignal (16) für die Rauschquelle (RQ) zu generieren und an diese abzugeben, und anhand von mindestens drei eingestellten Wertepaaren aus den Rauschsignalen ($x_i$) und den optimalen Entscheiderschwellen das optische Signal-Rausch-Verhältnis (50) zu ermitteln und es an ein System-Management abzugeben.

10. Anordnung nach Anspruch 9,
**dadurch gekennzeichnet,**
**dass** eine Fehlerkorrektur-Einheit (FEC) vorgesehen ist, deren Eingang das erste entschiedene Datensignal (21) zugeführt wird, in der vorhandene Bitfehler korrigiert werden, und die an ihrem ersten Ausgang ein korrigiertes entschiedenes Datensignal (22) abgibt und die an ihrem zweiten Ausgang ein Fehlerkorrektursignal (12) abgibt, wobei das Fehlerkorrektursignal (12) zur Ermittlung der optimalen Entscheiderschwelle für die Taktrückgewinnungs- und Entscheider-Einheit (CDR) verwendet wird.

11. Anordnung nach Anspruch 8,
**dadurch gekennzeichnet,**
**dass** dem opto-elektrischen Wandler (PD) eine optische Einheit zur Pegeleinstellung (PA) vorgeschaltet oder eine elektrische Einheit zur Pegeleinstellung (AGC) nachgeschaltet ist und dass diese Einheit zur Pegeleinstellung (PA, AGC) mit der Steuer- und Auswerteeinheit (SAE) verbunden ist und von dieser ein Steuersignal (15, 15A) erhält.

12. Anordnung nach Anspruch 9,
**dadurch gekennzeichnet,**
**dass** die Vergleichs-Einheit (XOR) als XOR-Glied oder als Komparator ausgebildet ist.

13. Anordnung nach Anspruch 9,
**dadurch gekennzeichnet,**
**dass** die Vergleichseinheit (XOR) als zweite Fehlerkorrektureinheit (FEC2) ausgebildet ist, in der vorhandene Bitfehler des zweiten entschiedenen Datensignals (32) korrigiert werden, und die an ihrem Ausgang ein zweites Fehlerkorrektursignal (45) abgibt, wobei das Datensignal (45) in der Steuer-und Auswerteeinheit (SAE) zur Ermittlung der optimalen Entscheiderschwelle für den Entscheider (D) verwendet wird.

14. Optische Empfangseinheit,
aufweisend eine Anordnung zur Bestimmung des optischen Signal-Rausch-Verhältnisses nach einem der Ansprüche 7 bis 13.

**Claims**

1. Method for determining the optical signal-to-noise ratio for an optical transmission system, having the following steps,
**characterized**
**in that**, at the receiving end, a transmitted optical data signal (1) is opto-electrically converted to an electrical data signal (3,30),
**in that** noise currents ($x_i$) having at least three different values are added to the electrical data signal (3,30),
**in that** an optimum decision threshold ($I_D(x_i)$) for an electrical data signal (4, 31) which is provided with this noise current ($x_i$) is determined for each added noise current ($x_i$) ,
**in that** values for a mean signal current ($I_{SIG}$) and a mean noise current of the amplified spontaneous emission ($I_{ASE}$) are determined from value pairs, which comprise the added noise current ($x_i$) and the corresponding optimum decision threshold ($I_D(x_i)$), using a calculation rule which is based on a noise model,
**in that** the optical signal-to-noise ratio (OSNR) is determined from the quotient of the mean signal current ($I_{SIG}$) and the mean noise current of the amplified spontaneous emission ($I_{ASE}$) .

2. Method according to Claim 1,
**characterized**
**in that** a signal value for the electrical data signal (4) provided with the noise current ($x_i$) is determined to a logic one or a logic zero,
**in that** any signal-value errors that occur are corrected and the number of corrected errors is determined, and in that the optimum decision threshold ($I_D(x_i)$ is determined by minimizing the error rate as determined by means of the corrected errors.

3. Method according to Claim 1,
**characterized**
**in that** the optimum decision threshold ($I_D(x_i)$ is determined by maximizing the correlation between an electrical data signal (32), which has been decided and is provided with the noise current ($x_i$), and an electrical data signal (21), which has been decided but is not provided with the noise current ($x_i$).

4. Method according to Claim 1,
**characterized**
**in that** the added noise currents ($x_i$) lie in an interval between one tenth of the mean photocurrent of the electrical data signal (3,30) and ten times the mean photocurrent of the electrical data signal (3,30).

5. Method according to Claim 1,
**characterized**
**in that** values for a signal current of logic one ($I_1$), for a signal current of logic zero ($I_0$) and the mean noise current of the amplified spontaneous emission ($I_{ASE}$) are determined from the value pair of the added noise current ($x_i$) and the optimum decision threshold ($I_D(x_i)$) using a calculation rule.

6. Method according to Claims 1 and 5,
**characterized**
**in that**, assuming the Gaussian noise model, the calculation rule for the optimum decision threshold ($I_D(x_i)$) as a function of the added noise current ($x_i$) is equal to:

$$I_D(x) = \frac{I_1 \cdot \sqrt{2 \gamma I_0 I_{ASE} + \gamma \cdot I_{ASE}^2 + x^2} + I_0 \cdot \sqrt{2 \gamma I_1 I_{ASE} + \gamma \cdot I_{ASE}^2 + x^2}}{\sqrt{2 \gamma I_0 I_{ASE} + \gamma \cdot I_{ASE}^2 + x^2} + \sqrt{2 \gamma I_1 I_{ASE} + \gamma \cdot I_{ASE}^2 + x^2}}$$

where $I_1$ represents the signal current of logic one,
$I_0$ represents the signal current of logic zero,
$I_{ASE}$ represents the noise current of the amplified spontaneous emission,
$\gamma$ represents a quotient of an effective electrical bandwidth at the receiver ($B_e$) divided by an effective optical filter bandwidth ($B_o$).

7. Arrangement for determining the optical signal-to-noise ratio for an optical transmission system, comprising a series circuit of an opto-electrical transducer (PD), an adder (ADD), a clock-recovery and decision-making unit (CDR) and an error correction unit (FEC), to whose input side an optical data signal (1) is supplied and which emits on the output side an electrical data signal (6) which has been decided,

in which a variable noise source (RQ) is provided, whose output is connected to the adder (ADD), and in which, furthermore, a control and evaluation unit (SAE) is provided, which is connected to the opto-electrical transducer (PD), to the noise source (RQ), to the clock-recovery and decision-making unit (CDR), and to the error correction unit (FEC),

- wherein the control and evaluation unit (SAE) is designed to determine an optimum decision threshold by means of a first input signal (11), which is supplied from the opto-electrical transducer (PD), a second input signal (17a) which is supplied by the clock-recovery and decision-making unit (CDR), and an error correction signal (12), which is supplied by the error correction unit (FEC), as a function of a first control signal (16) which is supplied to the noise source (RQ), and to emit said decision threshold to the clock-recovery and decision-making unit (CDR) via a second control signal (17b), and wherein the control and evaluation unit (SAE) is designed to determine a value for the optical signal-to-noise ratio (50) and to emit this to the system management after at least three settings of the noise current and of the optimum decision threshold.

8. Arrangement according to Claim 7,
   **characterized**
   **in that** the opto-electrical transducer (PD) is preceded by an optical unit for level setting (PA) or is followed by an electrical unit for level setting (AGC), and in that this unit for level setting (PA, AGC) is connected to the control and evaluation unit (SAE) and receives a control signal (15, 15A) from it.

9. Arrangement for determining the optical signal-to-noise ratio for an optical transmission system, comprising

   - an opto-electrical transducer (PD) which has an input for an optical data signal (1, 1A) and two electrical outputs, wherein the transducer (PD) is designed to opto-electrically convert the optical data signal (1, 1A), and to emit a first electrical data signal (2, 2A) and a second electrical data signal (11) at its first and second outputs,
   - a first junction point (Z1) which is designed to receive the first electrical data signal (2, 2A) at the input, and to emit a reference signal (20) and a first signal element (30) at two respective outputs,
   - a clock-recovery and decision-making unit (CDR) which has a first input for the reference signal (20) and a second input for a second control signal (17b), and which is designed to regenerate and decide the reference signal (20), and to emit a first data signal (21), which has been decided at its first output and to emit a clock signal (25) at its second output,
   - an adder (ADD) which has a first input for the first signal element (30) and a second input for a noise signal ($x_i$) which is emitted from a noise source (RQ), and is designed to add the noise signal ($x_i$) to the first signal element (30), and to emit an electrical data signal (31), on which noise is superimposed, at its output,
   - a decision maker (D), to whose first input the electrical data signal (31) with noise superimposed on it is supplied, to whose second input the clock signal (25) is supplied, to whose third input a third control signal (18) is supplied, in which an optimum decision threshold is set for the noisy electrical data signal, and at whose output a second data signal (32), which has been decided, is emitted,
   - a comparison unit (XOR), to whose first input the first data signal (21) which has been decided is supplied, to whose second input the second data signal (32) which has been decided is supplied, and which is designed to compare the two signals and to emit at its output a comparison signal (40) with the comparison result,
   - a control and evaluation unit (SAE), which has a first input for the second electrical data signal (11) and a second input for the comparison signal (40) and is designed to determine a value for the optimum decision threshold for the clock-recovery and decision-making unit (CDR) and to emit thereto via the second control signal (17b), to determine a further value for the optimum decision threshold for the decision maker (D) and to emit thereto via the third control signal (18), to generate a fourth control signal (16) for the noise source (RQ) and to emit thereto, and to determine the optical signal-to-noise ratio (50) on the basis of at least three set value pairs from the noise signals ($x_i$) and the optimum decision thresholds, and to emit this signal-to-noise ratio (50) to a system management.

10. Arrangement according to Claim 9,
    **characterized**
    **in that** an error correction unit (FEC) is provided, to whose input the first data signal (21) which has been decided is supplied, in which existing bit errors are corrected, and which emits at its first output a corrected data signal (22)

**EP 2 044 707 B1**

which has been decided, and emits at its second output an error correction signal (12), wherein the error correction signal (12) is used for determining the optimum decision threshold for the clock-recovery and decision-making unit (CDR).

**11.** Arrangement according to Claim 8,
**characterized**
**in that** the opto-electrical transducer (PD) is preceded by an optical unit for level setting (PA) or is followed by an electrical unit for level setting (AGC), and in that this unit for level setting (PA, AGC) is connected to the control and evaluation unit (SAE) and receives a control signal (15, 15A) from it.

**12.** Arrangement according to Claim 9,
**characterized**
**in that** the comparison unit (XOR) is in the form of an XOR gate or a comparator.

**13.** Arrangement according to Claim 9,
**characterized**
**in that** the comparison unit (XOR) is in the form of a second error correction unit (FEC2), in which any existing bit errors in the second data signal (32) which has been decided are corrected and which emits at its output a second error correction signal (45), wherein the data signal (45) is used in the control and evaluation unit (SAE) in order to determine the optimum decision threshold for the decision maker (D).

**14.** Optical receiving unit,
having an arrangement for determining the optical signal-to-noise ratio according to one of Claims 7 to 13.

**Revendications**

**1.** Procédé pour la détermination du rapport signal-bruit optique pour un système de transmission optique, comprenant les étapes suivantes,
un signal de données (1) optique transmis est converti du côté réception au plan opto-électrique en un signal de données (3, 30) électrique,
des courants de bruit ($x_i$) avec au moins trois valeurs différentes sont ajoutés au signal de données (3, 30) électrique,
pour chaque courant de bruit ($x_i$) ajouté, un seuil de décision ($I_D (x_i)$) optimal est déterminé pour un signal de données (4, 31) électrique doté de ce courant de bruit ($x_i$),
à partir de paires de valeurs qui comprennent le courant de bruit ($x_i$) ajouté et le seuil de décision ($I_D (x_i)$) optimal correspondant, des valeurs sont déterminées selon une prescription de calcul basée sur un modèle de bruit pour un courant de signaux moyen ($I_{SIG}$) et un courant de bruit moyen de l'émission spontanée amplifiée ($I_{ASE}$) ,
le rapport signal-bruit optique (OSNR) est déterminé à partir du quotient entre le courant de signaux moyen ($I_{SIG}$) et le courant de bruit moyen de l'émission spontanée amplifiée ($I_{ASE}$) .

**2.** Procédé selon la revendication 1,
**caractérisé en ce que**
une valeur de signal d'un un logique ou d'un zéro logique est décidé pour le signal de données (4) électrique doté du courant de bruit ($x_i$) ,
**en ce que** des erreurs apparaissant des valeurs de signal sont corrigées et le nombre des erreurs corrigées est déterminé, et **en ce que** le seuil de décision ($I_D (x_i)$) optimal est déterminé par la minimisation du taux d'erreurs déterminé au moyen des erreurs corrigées.

**3.** Procédé selon la revendication 1,
**caractérisé en ce que**
le seuil de décision ($I_D (x_i)$) optimal est déterminé par la maximisation d'une corrélation entre un signal de données (32) électrique décidé et doté du courant de bruit ($x_i$) et un signal de données (21) électrique décidé et non doté de courant de bruit ($x_i$) .

**4.** Procédé selon la revendication 1,
**caractérisé en ce que** les courants de bruit ($x_i$) ajoutés se situent dans un intervalle compris entre un dixième du courant photoélectrique moyen du signal de données (3, 30) électrique et dix fois le courant photoélectrique moyen du signal de données (3, 30) électrique.

**5.** Procédé selon la revendication 1,
**caractérisé en ce que**
des valeurs pour un courant de signaux du un logique ($I_1$), pour un courant de signaux du zéro logique ($I_0$) et le courant de bruit moyen de l'émission spontanée amplifiée ($I_{ASE}$) sont déterminées à partir de la paire de valeurs du courant de bruit ($x_i$) ajouté et du seuil de décision ($I_D(x_i)$) optimal selon une prescription de calcul.

**6.** Procédé selon les revendications 1 et 5,
**caractérisé en ce que**,
en admettant le modèle pour le bruit gaussien, la prescription de calcul pour le seuil de décision ($I_D(x_i)$) optimal, en fonction du courant de bruit ($x_i$) ajouté est égale à

$$I_D(x) = \frac{I_1 \cdot \sqrt{2\gamma I_0 I_{ASE} + \gamma \cdot I_{ASE}^2 + x^2} + I_0 \cdot \sqrt{2\gamma I_1 I_{ASE} + \gamma \cdot I_{ASE}^2 + x^2}}{\sqrt{2\gamma I_0 I_{ASE} + \gamma \cdot I_{ASE}^2 + x^2} + \sqrt{2\gamma I_1 I_{ASE} + \gamma \cdot I_{ASE}^2 + x^2}}$$

$I_1$ représentant le courant de signaux du un logique,
$I_0$ le courant de signaux du zéro logique,
$I_{ASE}$ le courant de bruit de l'émission spontanée amplifiée,
$\gamma$ un quotient résultant d'une largeur de bande électrique effective sur le récepteur ($B_e$) divisée par une largeur de bande de filtre ($B_0$) optique.

**7.** Agencement pour déterminer le rapport signal-bruit optique pour un système de transmission optique, comprenant un montage en série constitué d'un convertisseur opto-électrique (PD), d'un additionneur (ADD), d'une unité de récupération de rythme et d'une unité de décision (CDR) et d'une unité de correction d'erreurs (FEC), auquel est amené côté entrée un signal de données optique (1) et qui délivre côté sortie un signal de données (6) électrique décidé,
dans lequel il est prévu une source de bruit (RQ) réglable, dont la sortie est reliée à l'additionneur (ADD), et dans lequel il est prévu également une unité de commande et d'analyse (SAE) qui est reliée au convertisseur opto-électrique (PD), à la source de bruit (RQ), à l'unité de récupération de rythme et l'unité de décision (CDR) et à l'unité de correction d'erreurs (FEC),
l'unité de commande et d'analyse (SAE) étant conçue de façon à déterminer un seuil de décision optimal au moyen d'un premier signal d'entrée (11) amené par le convertisseur opto-électrique (PD), d'un second signal d'entrée (17a) amené par l'unité de récupération de rythme et l'unité de décision (CDR) et d'un signal de correction d'erreurs (12) amené par l'unité de correction d'erreurs (FEC), en fonction d'un premier signal de commande (16) amené à la source de bruit (RQ) et de façon à délivrer ledit seuil de décision à l'unité de récupération de rythme et de décision (CDR) au moyen d'un second signal de commande (17b), et l'unité de commande et d'analyse (SAE) étant réglée de façon à déterminer une valeur pour le rapport signal-bruit optique (50) après au moins trois réglages du courant de bruit et du seuil de décision optimal et à le délivrer à la gestion du système.

**8.** Agencement selon la revendication 7,
**caractérisé en ce que**
une unité optique pour le réglage du niveau (PA) est montée en amont du convertisseur opto-électrique (PD) ou une unité électrique pour le réglage du niveau (AGC) est montée en aval de ce convertisseur et **en ce que** cette unité pour le réglage du niveau (PA, AGC) est reliée à l'unité de commande et d'analyse (SAE) et reçoit de cette unité un signal de commande (15, 15A).

**9.** Agencement pour déterminer le rapport signal-bruit optique pour un système de transmission optique, comprenant

- un convertisseur opto-électrique (PD), qui présente une entrée pour un signal de données (1, 1A) optique et deux sorties électriques, le convertisseur (PD) étant conçu de façon à convertir le signal de données (1, 1A) optique au plan opto-électrique et à délivrer un premier signal de données (2, 2A) électrique et un second signal de données électrique (11) sur sa première et sa seconde sortie,
- un premier endroit d'embranchement (Z1) qui est réglé de façon à recevoir le premier signal de données (2, 2A) électrique sur l'entrée et à délivrer un signal de référence (20) et un premier signal partiel (30) sur deux sorties respectives,

- une unité de récupération de rythme et de décision (CDR), qui présente une première entrée pour le signal de référence (20) et une seconde entrée pour un second signal de commande (17b), et qui est conçue de façon à régénérer et à décider le signal de référence (20) et de façon à délivrer un premier signal de données (21) décidé sur sa première sortie et un signal de rythme (25) sur sa seconde sortie,

- un additionneur (ADD) qui présente une première entrée pour le premier signal partiel (30) et une seconde entrée pour un signal de bruit ($x_i$) délivré par une source de bruit (RQ), qui est conçu de façon à ajouter le signal de bruit ($x_i$) au premier signal partiel (30) et à délivrer sur sa sortie un signal de données (31) électrique superposé avec du bruit,

- un décideur (D), à la première entrée duquel le signal de données (31) électrique superposé avec du bruit est amené, à la seconde entrée duquel le signal de rythme (25) est amené, à la troisième entrée duquel un troisième signal de commande (18) est amené, dans lequel un seuil de décision optimal est réglé pour le signal de données électrique bruiteux et sur la sortie duquel un second signal de données (32) décidé est délivré,

- une unité de comparaison (XOR), à la première entrée duquel le premier signal de données (21) décidé est amené, à la seconde entrée duquel le second signal de données (32) décidé est amené, conçue de façon à comparer les deux signaux et à délivrer sur sa sortie un signal de comparaison (40) avec le résultat de comparaison,

- une unité de commande et d'analyse (SAE), qui présente une première entrée pour le second signal de données (11) électrique et une seconde entrée pour le signal de comparaison (40), conçue de façon à déterminer une valeur pour le seuil de décision optimal pour l'unité de récupération de rythme et de décision (CDR) et à la délivrer à cette unité via le second signal de commande (17b), à déterminer une autre valeur pour le seuil de décision optimal pour le décideur (D) et à la délivrer à celui-ci via le troisième signal de commande (18), à générer un quatrième signal de commande (16) pour la source de bruit (RQ) et à le délivrer à celle-ci, et à déterminer le rapport signal-bruit optique (50) à l'aide d'au moins trois paires de valeurs réglées à partir des signaux de bruit ($x_i$) et des seuils de décision optimaux et à délivrer ce rapport à une gestion de système.

10. Agencement selon la revendication 9,
   **caractérisé en ce que**
   il est prévu une unité de correction d'erreurs (FEC), à l'entrée de laquelle est amené le premier signal de données (21) décidé, dans laquelle des erreurs de bit présentes sont corrigées, et qui délivre un signal de données (22) décidé corrigé sur sa première sortie et qui délivre un signal de correction d'erreurs (12) sur sa seconde sortie, le signal de correction d'erreurs (12) étant utilisé pour la détermination du seuil de décision optimal pour l'unité de récupération de rythme et de décision (CDR).

11. Agencement selon la revendication 8,
   **caractérisé en ce que**
   une unité optique pour le réglage du niveau (PA) est montée en amont du convertisseur opto-électrique (PD) ou une unité électrique pour le réglage du niveau (AGC) est montée en aval de ce convertisseur et **en ce que** cette unité pour le réglage du niveau (PA, AGC) est reliée à l'unité de commande et d'analyse (SAE) et reçoit un signal de commande (15, 15A) de celle-ci.

12. Agencement selon la revendication 9,
   **caractérisé en ce que**
   l'unité de comparaison (XOR) est conçue comme élément XOR ou comme comparateur.

13. Agencement selon la revendication 9,
   **caractérisé en ce que**
   l'unité de comparaison (XOR) est conçue comme seconde unité de correction d'erreurs (FEC2), dans laquelle des erreurs de bit présentes du second signal de données (32) décidé sont corrigées, et qui délivre un second signal de correction d'erreurs (45) sur sa sortie, le signal de données (45) étant utilisé dans l'unité de commande et d'analyse (SAE) pour la détermination du seuil de décision optimal pour le décideur (D).

14. Unité de réception optique,
   présentant un agencement pour la détermination du rapport signal-bruit optique selon l'une quelconque des revendications 7 à 13.

## FIG 1A

## FIG 1B

# FIG 2

| | $I_0/I_1 = 0,05/0,95$ | $I_0/I_1 = 0,4/1,2$ | $I_0/I_1 = 0,4/1$ | $I_0/I_1 = 0/1,4$ |
|---|---|---|---|---|
| OSNR Real [dB] | OSNR fit [dB] | OSNR fit [dB] | OSNR fit [dB] | OSNR fit [dB] |
| 20 | 20 | 19.7 | 18.8 | 19.9 |
| 17 | 17 | 17 | 17 | 16.9 |
| 13 | 13 | 13.1 | 13 | 13 |
| 10 | 9.9 | 10 | 10.1 | 10.1 |
| 7 | 6.8 | 7 | 7 | 7 |

EP 2 044 707 B1

EP 2 044 707 B1

**FIG 3**

**FIG 4**

## FIG 5

## FIG 6

## FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1303062 A

**In der Beschreibung aufgeführte Nicht-Patentliteratur**

- **G. P. Agraval.** Fiber-Optic Communication Systems. John Wiley & Sons, 1997